# EUROPÄISCHE PATENTANMELDUNG

(11) **EP 1 655 184 A1**
(43) Veröffentlichungstag der Anmeldung: **10.05.2006**
(21) Anmeldenummer: 05022120.9
(22) Anmeldetag: 11.10.2005
(51) Int. Cl.: B60R 21/205

(54) **Fahrzeuginnenverkleidungsteil mit Airbagabdeckung**

(30) Priorität: 04.11.2004 DE 202004017029 U
(71) Anmelder: TRW Automotive Safety Systems GmbH & Co. KG, 63743 Aschaffenburg (DE)
(72) Erfinder: Wissel, Willi, 63825 Blankenbach (DE)
(74) Vertreter: Strass, Jürgen

(57) **Zusammenfassung**

Ein Fahrzeuginnenverkleidungsteil umfaßt eine integrierte aufklappbare Abdeckung für ein Fahrzeuginsassen-Rückhaltemodul. Das Verkleidungsteil (10) weist ein Trägerteil (12) mit einem vorgegebenen Sollbruchverlauf (16), der die Kontur der Abdeckung definiert, und eine auf dem Trägerteil (12) aufgebrachte Dekorschicht (14) mit einer Aufreißlinie (20) auf. Die Aufreißlinie (20) im Dekorelement (14) weist wenigstens abschnittsweise einen um den Sollbruchverlauf (16) im Trägerteil (12) alternierenden Verlauf auf.

## Beschreibung

Die Erfindung betrifft ein Fahrzeuginnenverkleidungsteil mit einer integrierten aufklappbaren Abdeckung für ein Fahrzeuginsassen-Rückhaltemodul, wobei das Verkleidungsteil ein Trägerteil mit einem vorgegebenen Sollbruchverlauf, der die Kontur der Abdeckung definiert, und eine auf dem Trägerteil aufgebrachte Dekorschicht mit einer Aufreißlinie aufweist.

Aus der DE 196 36 428 B4 ist ein gattungsgemäßes Fahrzeuginnenverkleidungsteil bekannt, das aus einem dreischichtigen Verbundmaterial besteht. Zur Bildung einer die Kontur der Airbagabdeckung definierenden Sollbruchlinie wird das Verbundmaterial bis in die oberste Schicht hinein perforiert. Die Sollbruchlinie hat einen um eine imaginäre Gerade alternierenden Verlauf, um eine möglichst tiefe, aber dennoch für die Insassen nicht sichtbare Sollbruchlinie zu ermöglichen.

Die DE 199 10 141 A1 zeigt eine Abdeckung für eine Airbageinheit, die z.B. aus einer Trägerschicht und einer Dekorschicht hergestellt wird. Anschließend werden Aufreißlinien in die Abdeckung geschnitten, ohne diese zu durchdringen. Die Aufreißlinien können wellenförmig sein, um die Stabilität gegen ein Durchdrücken bei Belastung der Abdeckung von außen zu erhöhen.

Die Herstellung einer Sollbruchlinie in einem Verbundmaterial, die sich bis in die obere Dekorschicht erstreckt, ist verhältnismäßig aufwendig und erlaubt wegen der Durchtrennung des Trägerteils keine durchgehende Sollbruchlinie. Ist gemäß einem anderen Herstellungsverfahren im Trägerteil ein Sollbruchverlauf vorgegeben und wird eine mit einer dem Sollbruchverlauf entsprechenden Aufreißlinie versehene Dekorschicht (z.B. ein eingeschnittenes Leder) auf das Trägerteil nachträglich aufkaschiert, erweist es sich als schwierig, den Schnittverlauf in der Dekorschicht exakt über dem Sollbruchlinienverlauf im Trägerteil zu positionieren. Weiter erschwert wird diese Positionierung durch die Veränderung der Abmessungen der Werkstoffe während der Vorbereitungsphase und des Verarbeitungsprozesses, bedingt durch Last-, Temperatur- und Feuchtigkeitseinflüsse.

Die Erfindung schafft ein Fahrzeuginnenverkleidungsteil der eingangs genannten Art, bei dem die Aufreißlinie in der Dekorschicht kostengünstig herstellbar und die anschließende Positionierung der Dekorschicht auf dem Trägerteil mit dem vorgegebenen Sollbruchverlauf vereinfacht ist.

Gemäß der Erfindung ist bei einem gattungsgemäßen Verkleidungsteil vorgesehen, daß die Aufreißlinie im Dekorelement wenigstens abschnittsweise einen um den Sollbruchverlauf im Trägerteil alternierenden Verlauf aufweist. Vorzugsweise entspricht der Verlauf der Aufreißlinie dem einer Sinuskurve. Es wird also bewußt kein deckungsgleicher Verlauf der Aufreißlinie und des im Vergleich dazu "geraden" Sollbruchverlaufs angestrebt. Vielmehr ist es ausreichend, wenn die Dekorschicht so auf dem Trägerteil positioniert wird, daß der vorgegebene Sollbruchverlauf im Trägerteil innerhalb der Amplitude der Sinuskurve der Aufreißlinie liegt. Damit ist die zulässige Toleranz bei der Positionierung der Dekorschicht auf dem Trägerteil erhöht. Die Aufreißlinie kann mit bekannten Verfahren wie Laserschneiden oder Schneiden mit oszillierenden Messern hergestellt werden. Im Vergleich zu scharfkantigen Schnittverläufen mit kleinen Schnittflächen ist bei einem sinusförmigen Verlauf der Aufreißlinie die Prozeßzeit zur Herstellung verkürzt, so daß die Herstellungskosten gering gehalten werden können. Der sinusförmige Verlauf der Aufreißlinie gewährleistet zudem ein ruckfreies Aufreißen der Dekorschicht ohne Kraftsprünge, und das Risiko eines unkontrollierten Einreißens und der Separation von Partikeln ist reduziert. Das Aufreißverhalten kann durch die Wahl der Amplitude und der Wellenlänge der Sinuskurve gezielt beeinflußt werden.

Zur Bildung von sogenannten Initialstellen, an denen der Beginn des Aufreißprozesses forciert wird, empfiehlt es sich, insbesondere in den Bereichen, in denen beim Entfalten des Airbags aus dem Rückhaltemodul heraus die größten Kräfte wirken, die Wellenlänge der Sinuskurve zu verkürzen. Dadurch wird erreicht, daß sich die Aufreißlinie und der Sollbruchverlauf in kurzem Abstand mehrmals kreuzen, so daß an diesen Stellen die Materialschwächung des Fahrzeuginnenverkleidungsteils insgesamt stärker ausgeprägt ist.

Damit die Aufreißlinie weitgehend unsichtbar bleibt, ist es zweckmäßig, die Aufreißlinie nicht durchgehend auszuführen. Idealerweise ist die Aufreißlinie an Scheitelpunkten der Sinuskurve unterbrochen.

Im Falle einer Verzweigung der Aufreißlinie erweist es sich als vorteilhaft, wenn der Verzweigungspunkt einem Scheitelpunkt der Sinuskurve entspricht. Dadurch läßt sich auch bei der Verzweigung ein gleichmäßiges, kontrolliertes Aufreißverhalten erzielen.

Die Erfindung wird nachfolgend anhand eines Ausführungsbeispiels unter Bezugnahme auf die beigefügten Zeichnungen beschrieben. In den Zeichnungen zeigen:
- Figur 1 eine Draufsicht auf einen Teil eines erfindungsgemäßen Fahrzeuginnenverkleidungsteils; und
- Figur 2 eine vergrößerte Schnittansicht des Bereichs A aus Figur 1.

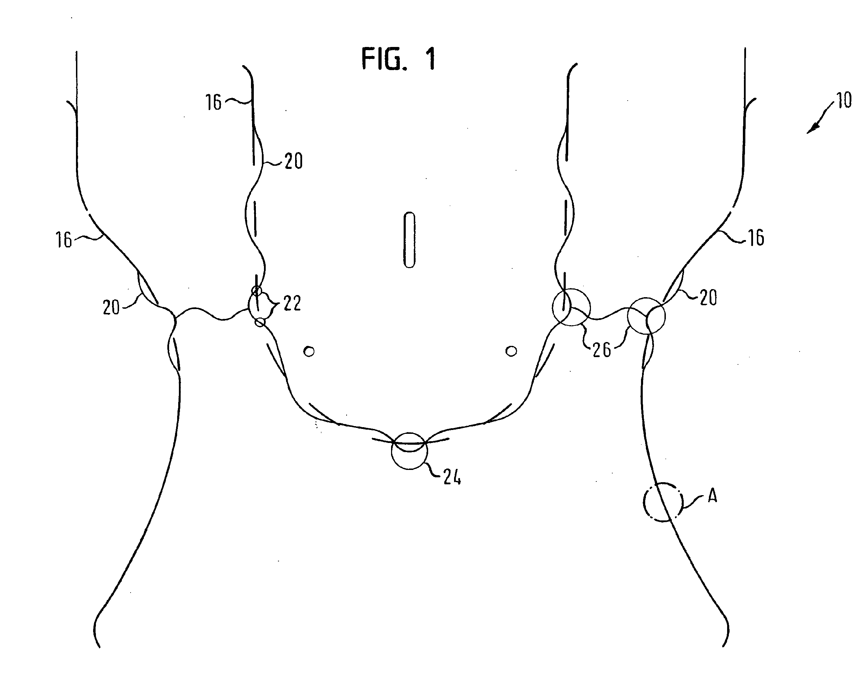

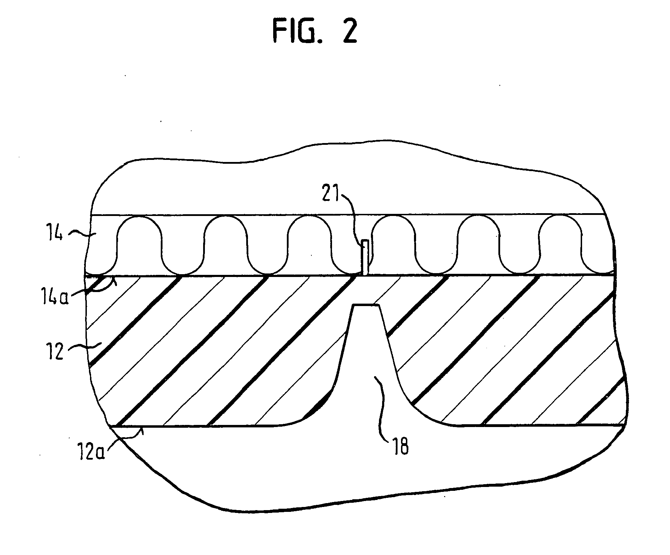

Das in Figur 1 beispielhaft dargestellte Fahrzeuginnenverkleidungsteil 10 ist Teil eines Fahrzeuglenkrads und überdeckt ein darin untergebrachtes Airbagmodul. Das Verkleidungsteil 10 besteht, wie aus Figur 2 hervorgeht, aus einem Kunststoffträgerteil 12 und einer Dekorschicht 14, die auf das Trägerteil 12 aufkaschiert ist. Die Dekorschicht 14 kann ein Leder, ein Lederimitat, ein Gewebe ein Gewirke, ein Mikrofasersystem, eine Folie, ein Holzfurnier oder dergleichen sein.

Im Trägerteil 14 ist ein Sollbruchverlauf 16 vorgegeben, der eine aufklappbare Abdeckung für das Airbagmodul definiert. Der Sollbruchverlauf 16 ist durch eine Materialschwächung 18 im Trägerteil 12 gebildet. Die Materialschwächung 18 kann bereits beim Spritzen oder Schäumen des Trägerteils 12 oder erst nachträglich durch Materialabtrag hergestellt werden. Die Materialschwächung 18 hat im Querschnitt die Form einer sich verjüngenden Nut, die sich von der der Dekorschicht 14 abgewandten Seite 12a in das Trägerteil 12 hineinerstreckt, dieses aber nicht vollständig durchdringt.

Die Dekorschicht 14 weist eine Aufreißlinie 20 auf, die im Falle eines Leders z.B. durch einen Einschnitt 21 (in Figur 2 verbreitert dargestellt) gebildet sein kann. Die Aufreißlinie 20 erstreckt sich im Querschnitt, wie in Figur 2 gezeigt, von der dem Trägerteil 12 zugewandten Seite 14a bis zu einer Tiefe, die etwa 50 bis 70 % der Dicke der Dekorschicht 14 entspricht, in diese hinein.

Wie in Figur 1 zu erkennen ist, entspricht der Verlauf der Aufreißlinie 20 zwar grundsätzlich dem Sollbruchverlauf 16 im Trägerteil 12, ist mit diesem aber nicht deckungsgleich. Vielmehr alterniert der Verlauf der Aufreißlinie 20 in einigen Abschnitten in Form einer Sinuskurve um den Sollbruchverlauf 16 im Trägerteil 12. In den anderen Abschnitten hat die Aufreißlinie den gleichen geraden Verlauf wie der Sollbruchverlauf 16.

In bestimmten Bereichen ist die Wellenlänge der Sinuskurve der Aufreißlinie 20 bei annähernd gleicher Amplitude deutlich verkürzt, so daß in diesen Bereichen die Aufreißlinie 20 in der Dekorschicht 14 den Sollbruchverlauf 16 im Trägerteil 12 häufiger kreuzt. In den mit 22, 24, 26 bezeichneten Bereichen befinden sich beispielsweise jeweils zwei Kreuzungspunkte dicht hintereinander, während in den übrigen Bereichen mit verhältnismäßig flachem Wellenverlauf zwei aufeinanderfolgende Kreuzungspunkte einen deutlich größeren Abstand voneinander haben. Die Bereiche 22, 24, 26 mit verkürzter Wellenlänge bilden Initialstellen, an denen die Schwächung des Innenverkleidungsteils insgesamt am größten ist. Diese Stellen liegen über den Bereichen, in denen beim Entfalten des Airbags aus dem Rückhaltemodul heraus die größten Kräfte wirken, so daß eine schnellstmögliche anfängliche Öffnung der Abdeckung erreicht wird.

Die Aufreißlinie 20 ist an mehreren Stellen unterbrochen, um deren Abzeichnung an der sichtbaren Oberfläche der Dekorschicht 14 entgegenzuwirken. Im dargestellten Beispiel befinden sich die Unterbrechungen an den Scheitelpunkten der Sinuskurve. Die Länge der Unterbrechungen, an denen die Aufreißlinie in der Dekorschicht 14 die volle Dicke aufweist, kann z.B. 80 % dieser Dicke betragen.

In Figur 1 sind Bereiche 26 gezeigt, in denen sich die Aufreißlinie 20 verzweigt. Die Verzweigungspunkte sind so gewählt, daß sie mit Scheitelpunkten der Sinuskurve zusammenfallen.

## Patentansprüche

1. Fahrzeuginnenverkleidungsteil mit einer integrierten aufklappbaren Abdeckung für ein Fahrzeuginsassen-Rückhaltemodul, wobei das Verkleidungsteil (10) ein Trägerteil (12) mit einem vorgegebenen Sollbruchverlauf (16), der die Kontur der Abdeckung definiert, und eine auf dem Trägerteil (12) aufgebrachte Dekorschicht (14) mit einer Aufreißlinie (20) aufweist, **dadurch gekennzeichnet, daß** die Aufreißlinie (20) im Dekorelement (14) wenigstens abschnittsweise einen um den Sollbruchverlauf (16) im Trägerteil (12) alternierenden Verlauf aufweist.

2. Fahrzeuginnenverkleidungsteil nach Anspruch 1, **dadurch gekennzeichnet, daß** der Verlauf der Aufreißlinie (20) dem einer Sinuskurve entspricht.

3. Fahrzeuginnenverkleidungsteil nach Anspruch 2, **dadurch gekennzeichnet, daß** in bestimmten Bereichen (22, 24, 26) die Wellenlänge der Sinuskurve verkürzt ist.

4. Fahrzeuginnenverkleidungsteil nach Anspruch 2 oder 3, **dadurch gekennzeichnet, daß** die Aufreißlinie (20) an Scheitelpunkten der Sinuskurve unterbrochen ist.

5. Fahrzeuginnenverkleidungsteil nach einem der Ansprüche 2 bis 4, **dadurch gekennzeichnet, daß** sich die Aufreißlinie (20) verzweigt und der Verzweigungspunkt einem Scheitelpunkt der Sinuskurve entspricht.
